# EUROPÄISCHE PATENTSCHRIFT

(11) **EP 0 645 233 B1**
(45) Veröffentlichungstag und Bekanntmachung des Hinweises auf die Patenterteilung: **08.01.1997**
(21) Anmeldenummer: 94113736.6
(22) Anmeldetag: 02.09.1994
(51) Int. Cl.: B29C 51/16, E03C 1/12

(54) **Verfahren zur Herstellung einer Sanitärbereich-Wanne**
Method for producing a sanitary tub
Procédé pour la fabrication d'une baignoire

(30) Priorität: 24.09.1993 DE 4332467
(43) Veröffentlichungstag der Anmeldung: 29.03.1995
(73) Patentinhaber: ROTH WERKE GMBH, D-35230 Dautphetal (DE)
(72) Erfinder:
(74) Vertreter: Andrejewski, Walter, Dr.

(56) Entgegenhaltungen:
- EP-A- 0 480 451
- EP-A- 0 520 508
- DE-A- 2 617 636

## Beschreibung

Die Erfindung betrifft ein Verfahren zur Herstellung einer Sanitärbereich-Wanne mit einem Wannenträger aus einem Schaumkunststoff und einer damit verbundenen gebrauchsseitigen Wannenschale aus einem tiefziehfähigen, thermoplastischen Kunststoff. Die Erfindung betrifft fernerhin nach dem Verfahren hergestellte Sanitärbereich-Wannen. - Der Ausdruck Sanitärbereich-Wanne bezeichnet im Rahmen der Erfindung Badewannen und Duschwannen, aber auch andere wannenförmige oder schalenförmige Gegenstände, z. B. Waschbecken, die im Sanitärbereich angeordnet werden. - Schaumkunststoff bezeichnet im Rahmen der Erfindung aus Polymeren hergestellte Schaumstoffe, welche die für die angegebene Verwendung ausreichende Festigkeit aufweisen. Thermoplastische Kunststoffe meint im Rahmen der Erfindung solche, die für Sanitärbereich-Wannen geeignet und mit dem Schaumkunststoff verbindbar sind.

Bei dem aus der Praxis bekannten Verfahren gemäß dem einleitenden Teil des Anspruchs 1, von dem die Erfindung ausgeht, wird der Wannenträger vorgefertigt, z. B. durch spanende Formgebung oder, gemäß dem Verfahren beschrieben im DE-A-2 617 636, durch Schäumen des Schaumkunststoffes in entsprechenden Formen. Die Wannenschale wird durch Vakuumtiefziehen unter Verwendung besonderer Vakuumtiefziehformen und entsprechender Einrichtungen in dem Wannenträger tiefgezogen und gleichzeitig verklebt. Die Wannenschale wird manchmal in den Wannenträger auch lose eingesetzt. Wird die Wannenschale in den Wannenträger lose eingesetzt, so führt der fehlende Verbund zwischen diesen beiden Bauteilen häufig zu Nachteilen, welche die Lebensdauer der Sanitärbereich-Wanne in der oft feuchten Atmosphäre von Sanitärbereichen beeinträchtigen. Der im Rahmen der bekannten Maßnahmen praktizierte Klebverbund ist aufwendig und häufig über die Kontaktflächen nicht ausreichend homogen. Auch das kann in der feuchten Atmosphäre zu Nachteilen durch Wasserdampfdiffusion führen.

Der Erfindung liegt das technische Problem zugrunde, bei Sanitärbereich-Wannen einen einfachen und sicheren Verbund zwischen dem Wannenträger und der Wannenschale zu verwirklichen, der unempfindlich ist gegen die oft feuchte Atmosphäre in Sanitärbereichen. Es versteht sich, daß der Verbund auch allen mechanischen und thermischen Beanspruchungen genügen muß.

Zur Lösung dieser Aufgabe ist Gegenstand der Erfindung ein Verfahren zur Herstellung einer Sanitärbereich-Wanne gemäß Anspruch 1. - Das Merkmal, daß der Wannenträger als Matrize verwendet wird, besagt nicht, daß die Formgebung in der Matrize stattfindet, obgleich sie dort stattfinden kann. Das Merkmal besagt jedoch, daß der Wannenträger wie eine Matrize den Verbindungspreßdruck aufnimmt, den der Tiefziehpreßstempel unter Zwischenschaltung der Wannenschale auf den Wannenträger überträgt. Sollte die Wannenschale, insbes. bezüglich der Seitenwände, so geformt sein, daß die beschriebene Wechselwirkung des im allgemeinen starren und linear bewegten Tiefziehpreßstempels mit dem als Matrize eingesetzten Wannenträger nicht in allen Bereichen, in denen der Verbund erforderlich ist, den notwendigen Verbindungspreßdruck erzeugt, so wird vorzugsweise mit einem Wannenträger gearbeitet, der als Matrize in Wechselwirkung mit dem Tiefziehpreßstempel preßdruckerzeugende Ausformungen aufweist, die bei Verwirklichung des Merkmals e) eine Kompression erfahren und dadurch als Reaktion den Preßdruck erzeugen.

Bevorzugte Ausführungen der Erfindung werden in den abhängigen Ansprüche beschrieben.

Nach bevorzugter Ausführungsform der Erfindung wird für den Wannenträger ein Werkstoff der im Patentanspruch 3 beanspruchten Gruppe eingesetzt. Für die Wannenschale wird für den Wannenträger zweckmäßigerweise ein Werkstoff der im Patentanspruch 4 beanspruchten Gruppe eingesetzt. Bei einer bevorzugten Ausführungsform der Erfindung werden ein Polystyrol-Werkstoff für den Wannenträger und ein Polyacryl-Werkstoff für die Wannenschale gepaart. Es versteht sich, daß auch mit anderen geeigneten Stoffen gearbeitet werden kann, beispielsweise mit Acrylnitril-Butadien-Styrol-Copolymeren für die Wannenschale.

Die Erfindung geht von der Erkenntnis aus, daß durch die Kombination der Merkmale a) bis e) ein sicherer und allen Anforderungen genügender Verbund zwischen dem Wannenträger und der Wannenschale sichergestellt werden kann, wenn die beschriebene Abstimmung durchgeführt wird, nämlich die Erwärmung des plattenförmigen Rohlings im Rahmen des Merkmals d) bis zu der Temperatur erfolgt, die als Verbindungstemperatur im Rahmen des Merkmals e) für die ausreichende Verbindung der Wannenschale mit dem Wannenträger erforderlich ist. Das ist insbesondere dann der Fall, wenn der Wannenträger durch Ausschäumformgebung geformt wird und eine jungfräuliche und verbindungsfreudige Oberfläche aufweist. Die Verbindungstemperatur hängt von den Werkstoffpaarungen ab, die im Rahmen der Erfindung getroffen werden. Sie kann durch einfache Versuche leicht ermittelt werden. Im allgemeinen empfiehlt es sich, den plattenförmigen Rohling auf eine oberhalb der werkstofftypischen Tiefziehtemperatur liegende Verbindungstemperatur zu erwärmen, die selbstverständlich auch das Tiefziehen noch erlauben muß. Es versteht sich, daß der vorgewärmte plattenförmige Rohling eine möglichst homogene Temperaturverteilung aufweisen soll. - Wenn beispielsweise die Tiefziehtemperatur bei 120 °C liegt, kann die Verbindungstemperatur 170 °C ausmachen.

Die Verformungsgeschwindigkeit des plattenförmigen Rohlings kann weitgehend beliebig gewählt werden, jedoch ist Vorsorge zu treffen, daß eine Bildung von Oberflächenrissen, auch im mikroskopischen Bereich nicht auftritt. Dazu wird zweckmäßigerweise die Verformungsgeschwindigkeit, temperaturabhängig, kleiner gewählt als es der entsprechenden Relaxationsgeschwindigkeit entspricht.

Bei der Verformung des vorgewärmten Rohlings zu der Wannenschale soll eine störende Abkühlung des Rohlings nicht stattfinden. Dazu empfiehlt die Erfindung, mit einem Tiefziehpreßstempel zu arbeiten, mit dem beim Verbindungspreßvorgang eine Kühlung der Wannenschale erreicht wird.

Es versteht sich, daß im Rahmen der Erfindung der Verbindungspreßdruck von den gewählten Werkstoffpaarungen abhängt. Wird mit den Werkstoffen gearbeitet, die in den Ansprüchen 3 und 4 angegeben sind, so reicht ein Verbindungspreßdruck im Bereich von 3 bis 10 Minuten, vorzugsweise von etwa 5 Minuten, aus. Dabei wird zweckmäßigerweise, abhängig vom Raumgewicht, mit einer spezifischen Flächenpressung im Bereich von 5 bis 10 N/cm², vorzugsweise von etwa 7,5 N/cm², gearbeitet. Im Rahmen der Erfindung erlaubt es die Abstimmung der beschriebenen Merkmale der Patentansprüche 1 und 2, mit kleberfreien Kontaktflächen zwischen Wärmeträger und Wannenschale zu arbeiten. Die Abstimmung erlaubt es ferner, mit haftvermittlerfreien Kontaktflächen zwischen Wärmeträger und Wannenschale zu arbeiten. Diesen Ausführungsformen kommt in Kombination mit den Merkmalen der Patentansprüche 1 und 2 besondere und selbständige Bedeutung zu, zumal durch die Arbeitsweise ohne Kleber und/oder Haftvermittler auch die Recycling-Fähigkeit verbessert wird.

Es zeigen in schematischer Darstellung
- Fig. 1: einen Vertikalschnitt durch eine Sanitärbereich-Wanne, ausschnittsweise
- Fig. 2: den wesentlich vergrößerten Ausschnitt A aus dem Gegenstand nach Fig. 1.

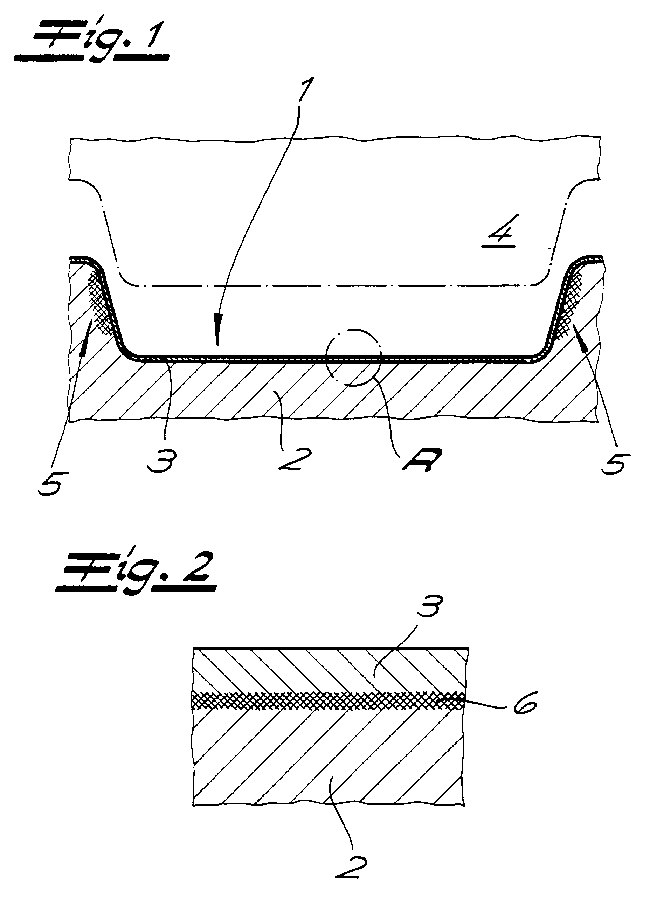

Man entnimmt aus den Fig. 1 und 2, daß die Sanitärbereich-Wanne 1 aus einem Wannenträger 2 aus einem geschäumten Kunststoff und einer Wannenschale 3 aus einem anderen Werkstoff besteht. Bei dem geschäumten Kunststoff des Wannenträgers 2 mag es sich um einen Polystyrol-Kunststoff handeln. Bei dem Werkstoff der Wannenschale 3 mag es sich um einen Polyacryl-Werkstoff. handeln. Der Fachmann entnimmt aus einer vergleichenden Betrachtung der Fig. 1 und 2, daß der Wannenträger 2 als Matrize für die Wannenschale 3 in einer Tiefziehpresse geformt wurde. Dazu wurde der plattenförmige Rohling für die Wannenschale 3 in einen nicht gezeichneten Spannrahmen eingespannt und z. B. auf den Wannenträger aufgelegt. Die Durchführung des Tiefziehvorganges erfolgte mit einem der zu formenden Wannenschale 3 angepaßten Tiefziehpreßstempel 4, der in der Fig. 1 angedeutet wurde und die Formgebung der Wanne bewirkt. Der Verbund erfolgte durch die im Patentanspruch 1 beschriebenen weiteren Verfahrensschritte und durch die dort beschriebene Abstimmung. Die zusätzliche Schraffur bei 5 deutet an, daß hier eine preßdruckerzeugende Verdichtung des Wannenträgers beim Verbindungspreßvorgang verwirklicht wurde.

Man erkennt in der Fig. 2 eine Verbundzone 6, nämlich gleichsam ein stoffschlüssiges Verschmelzen der beiden Werkstoffe an den Kontaktflächen. Ein Haftvermittler und/oder Kleber wurde nicht verwendet. Der erreichte Verbund ist sehr homogen, weitgehend unempfindlich gegen Wasserdampfdiffusion und nimmt alle Beanspruchungen auf. Die Lebensdauer der Sanitärbereich-Wanne ist erstaunlich lang.

## Patentansprüche

1. Verfahren zur Herstellung einer Sanitärbereich-Wanne (1) mit einem Wannenträger (2) aus einem Schaumkunststoff und einer damit verbundenen, gebrauchsseitigen Wannenschale (3) aus einem tiefziehfähigen, thermoplastischen Kunststoff, wobei der Wannenträger (2) als Matrize mit Boden und Seitenwänden für die Wannenschale (3) in einer Tiefziehpresse verwendet wird, und ein erwärmter plattenförmiger Rohling auf den Wannenträger (2) aufgelegt sowie mit einem formgebenden Tiefziehpreßstempel in den Wannenträger (2) eingezogen wird, **gekennzeichnet durch** die folgenden Verfahrensschritte,
a) Auflegen des erwärmten Rohlings auf einen dem Wannenträger (2) zugeordneten Spannrahmen und Durchführung des Tiefziehvorganges mit einem formgebenden Tiefziehpreßstempel,
b) Halten des Tiefziehpreßstempels im Anschluß an den Tiefziehvorgang mit einem Verbindungspreßdruck bis zum ausreichenden Verbund der Wannenschale (3) mit dem Boden und den Seitenwänden des Wannenträgers (2),
wobei mit kleberfreien Kontaktflächen zwischen Wannenträger (2) und Wannenschale (3) gearbeitet wird und wobei die Erwärmung des plattenförmigen Rohlings bis zu der Temperatur erfolgt, die als Verbindungstemperatur im Rahmen des Merkmals b) für den ausreichenden Verbund der Wannenschale (3) mit dem Wannenträger (2) erforderlich ist.

2. Verfahren nach Anspruch 1, wobei mit einem Wannenträger (2) gearbeitet wird, der als Matrize in Wechselwirkung mit dem Tiefziehpreßstempel, zumindest im Bereich der Seitenwände, preßdruckerzeugende Ausformungen aufweist.

3. Verfahren nach einem der Ansprüche 1 oder 2, wobei für den Wannenträger (2) ein geschäumter Polystyrol-Kunststoff eingesetzt wird.

4. Verfahren nach einem der Ansprüche 1 bis 3, wobei für die Wannenschale (3) ein Polyacryl-Kunststoff eingesetzt wird.

5. Verfahren nach einem der Ansprüche 1 bis 4, wobei ein Polystyrol-Werkstoff für den Wannenträger (2) und ein Polyacryl-Werkstoff für die Wannenschale (3) gepaart werden.

6. Verfahren nach einem der Ansprüche 1 bis 4, wobei der Wannenträger (2) durch Ausschäumformgebung geformt wird.

7. Verfahren nach einem der Ansprüche 1 bis 5, wobei der plattenförmige Rohling auf eine oberhalb der werkstofftypischen Tiefziehtemperatur liegende Verbindungstemperatur erwärmt wird.

8. Verfahren nach einem der Ansprüche 1 bis 7, wobei mit einem Tiefziehpreßstempel gearbeitet wird, mit dem beim Verbindungspreßvorgang eine Kühlung der Wannenschale (3) bewirkt wird.

9. Verfahren nach einem der Ansprüche 1 bis 8, wobei der Verbindungspreßdruck etwa 3 bis 10 Minuten, vorzugsweise etwa 5 Minuten, aufrechterhalten wird.

10. Verfahren nach einem der Ansprüche 1 bis 9, wobei der Verbindungspreßdruck mit einer spezifischen Flächenpressung im Bereich von 5 bis 10 N/cm², vorzugsweise von etwa 7,5 N/cm², aufrechterhalten wird.

11. Verfahren nach einem der Ansprüche 1 bis 10, wobei mit haftvermittlerfreien Kontaktflächen zwischen Wannenträger (2) und Wannenschale (3) gearbeitet wird.

## Claims

1. A process for producing a tub (1) for the sanitary domain having a tub support (2) made of a foamed synthetic material and having a tub basin (3) which is attached thereto on the side of use and is made of a thermoformable, synthetic thermoplastic material, wherein the tub support (2) is used in a thermoforming press as a female mould with a base and sidewalls for the tub basin (3), and a heated blank in sheet form is placed on the tub support (2) and is drawn into the tub support (2) by a moulding thermoforming pressure ram, characterised by the following process steps:
a) placing the heated blank on a clamping frame associated with the tub support (2) and effecting the thermoforming operation using a moulding thermoforming pressure ram,
b) holding the thermoforming pressure ram with a moulding pressure following the thermoforming operation until the tub basin (3) is satisfactorily bonded to the base and the sidewalls of the tub support (2),
wherein contact surfaces which are free from adhesive are employed between the tub support (2) and the tub basin (3) and wherein heating of the sheet-form blank is effected up to the temperature which is necessary within the context of feature b) as the joining temperature for a satisfactory bond of the tub basin (3) to the tub support (2).

2. A process according to claim 1, wherein a tub support (2) is employed which, as a female mould, comprises formations at least in the region of the sidewalls, which formations produce a moulding pressure in cooperation with the thermoforming pressure ram.

3. A process according to either one of claims 1 or 2, wherein a foamed polystyrene synthetic material is used for the tub support (2).

4. A process according to any one of claims 1 to 3, wherein a polyacrylic synthetic material is used for the tub basin (3).

5. A process according to any one of claims 1 to 4, wherein a polystyrene material for the tub support (2) is paired with a polyacrylic material for the tub basin (3).

6. A process according to any one of claims 1 to 4, wherein the tub support (2) is formed by moulding with foaming.

7. A process according to any one of claims 1 to 5, wherein the sheet-form blank is heated to a joining temperature which is above the typical thermoforming temperature for the material.

8. A process according to any one of claims 1 to 7, wherein a thermoforming pressure ram is employed with which cooling of the tub basin (3) is effected during the joining pressing operation.

9. A process according to any one of claims 1 to 8, wherein the joining moulding pressure is maintained for about 3 to 10 minutes, preferably about 5 minutes.

10. A process according to any one of claims 1 to 9, wherein the joining moulding pressure is maintained at a specific pressing force per unit area in the range from 5 to 10 N/cm², preferably about 7.5 N/cm².

11. A process according to any one of claims 1 to 10, wherein contact surfaces which are free from bonding agent are employed between the tub support (2) and the tub basin (3).

## Revendications

1. Procédé de fabrication d'une baignoire(1), comprenant un support de baignoire (2) en matière plastique cellulaire et rattachée à celui-ci, du côté utilisation, une cuve de baignoire (3) en matière thermoplastique thermoformable, le support de baignoire (2) étant utilisé comme matrice, avec un fond et des parois latérales pour la cuve de baignoire (3), dans un moule de thermoformage et une ébauche chauffée en forme de plaque étant déposée sur le support de baignoire (2) et rentrée dans le support de baignoire (2) au moyen d'un poinçon de façonnage, **caractérisé en** ce qu'il comprend les étapes de procédé suivantes :
a) dépose de l'ébauche chauffée sur un cadre de fixation associé au support de baignoire (2) et exécution du thermoformage au moyen d'un poinçon de façonnage,
b) maintien du poinçon de façonnage à la suite du thermoformage avec une pression de liaison jusqu'à l'obtention d'une liaison suffisante de la cuve de baignoire (3) avec le fond et les parois latérales du support de baignoire (2),
et dans lequel on travaille avec des surfaces de contact sans colle entre le support de baignoire (2) et la cuve de baignoire (3) et on chauffe l'ébauche en forme de plaque jusqu'à une température qui est nécessaire en tant que température de liaison dans le cadre de la caractéristique b) pour une liaison suffisante entre la cuve de baignoire (3) et le support de baignoire (2).

2. Procédé selon la revendication 1, caractérisé en ce qu'on travaille avec un support de baignoire (2) qui, en tant que matrice en coopération avec le poinçon, présente au moins dans la région des parois latérales, des profils produisant la pression de moulage.

3. Procédé selon l'une des revendications 1 ou 2, caractérisé en ce qu'on utilise pour le support de baignoire (2) une matière plastique polystyrène cellulaire.

4. Procédé selon l'une des revendications 1 à 3, caractérisé en ce qu'une matière plastique polyacrylique est utilisée pour la cuve de baignoire (3).

5. Procédé selon l'une des revendications 1 à 4, caractérisé en ce qu'on associe un matériau polystyrène pour le support de baignoire (2) et un matériau polyacrylique pour la cuve de baignoire (3).

6. Procédé selon l'une des revendications 1 à 4, caractérisé en ce que le support de baignoire (2) est façonné par moussage.

7. Procédé selon l'une des revendications 1 à 5, caractérisé en ce que l'ébauche en forme de plaque est portée à une température de liaison située au-dessus de la température de thermoformage typique du matériau.

8. Procédé selon l'une des revendications 1 à 7, caractérisé en ce qu'on travaille avec un poinçon qui provoque un refroidissement de la cuve de baignoire (3) lors de la compression de liaison.

9. Procédé selon l'une des revendications 1 à 8, caractérisé en ce que la pression de liaison est maintenue pendant environ 3 à 10 minutes, de préférence pendant environ 5 minutes.

10. Procédé selon l'une des revendications 1 à 9, caractérisé en ce que la pression de liaison est maintenue avec une pression superficielle de l'ordre de 5 à 10 N/cm², de préférence d'environ 7,5 N/cm².

11. Procédé selon l'une des revendications 1 à 10, caractérisé en ce qu'on travaille avec des surfaces de contact sans agent adhésif entre le support de baignoire (2) et la cuve de baignoire (3).
